# EUROPEAN PATENT APPLICATION

(11) **EP 4 794 188 A1**
(43) Date of publication of application: **19.08.2026**
(21) Application number: 25157631.0
(22) Date of filing: 13.02.2025
(51) Int. Cl.: H02P 9/30, H02K 11/00, H02K 11/20, H02K 11/25, H02K 11/35, H02K 19/12, H02P 25/03

(54) **AN ELECTRICALLY EXCITED SYNCHRONOUS MACHINE AND METHOD**

(71) Applicant: Volvo Truck Corporation, 405 08 Göteborg (SE)
(72) Inventor: HALL, Sebastian, GÖTEBORG (SE); OTTOSSON, Jonas, FALKENBERG (SE)
(74) Representative: Ström & Gulliksson AB

(57) **Abstract**

An electrically excited synchronous machine (20) is provided, comprising: a stator (220) having a plurality of stator windings (222), a rotor (230) having a plurality of rotor windings (236), and a transformer (240) comprising a stationary primary winding (242) and a secondary winding (244) arranged on the rotor (230). The secondary winding (244) is configured to generate a field current (*i_{F}*) when excited by a control current (*i_{C}*) in the stationary primary winding (242). The electrically excited synchronous machine (20) further comprises: a sensor (250) in connection with the rotor windings (236) and configured to obtain sensor data (252) relating to the field current (*i_{F}*) applied to the rotor windings (236), and an optical data connection (260) configured to transmit field current data (254), said field current data (254) being based on the obtained sensor data (252).

## Description

### TECHNICAL FIELD

The disclosure relates generally to electrical machines. In particular aspects, the disclosure relates to electrically excited synchronous machines and methods. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electrically excited synchronous machines (EESMs) have been developed with the aim of reducing the use of magnetic material, and in particular rare earth materials, for electrical machines. The general concept of EESMs is to employ copper windings in the rotor instead of rare earth magnets to generate the magnetic flux in the rotor.

For operation, an EESM requires currents to be transferred to the rotor windings. This is typically achieved either by using carbon brushes, or by using rotating transformers with rectifier circuits on the rotor that create a DC current in the rotor windings. Regardless of which method being used, power electronics and controller circuits must be introduced to control the rotor currents.

Supplying the rotor windings with current with a rotating transformer requires one stationary primary winding which is excited with oscillating voltages and currents and a rotating secondary winding that supply the field windings with currents through rectifying bridges. The rotating transformer makes it possible to excite the rotor windings without mechanical connection between the rotating and stationary parts, which enhances the durability with a sufficient transformer design.

The rotor current, normally referred to as the field current since it generates a magnetic field in the rotor, enables the machine to generate torque. The maximum torque that can be generated and the efficiency of the EESM is highly dependent on the field current. Hence, in order to optimally control the EESM, the field current must be known.

In view of this, there is a need for determining the actual field current of an EESM, as well as to allow the use of such information when controlling the operation of the EESM.

### SUMMARY

According to a first aspect of the disclosure, an electrically excited synchronous machine is provided. The electrically excited synchronous machine comprises a stator having a plurality of stator windings, a rotor having a plurality of rotor windings, and a transformer comprising a stationary primary winding and a secondary winding arranged on the rotor, said secondary winding being configured to generate a field current when excited by a control current in the stationary primary winding. The electrically excited synchronous machine further comprises a sensor in connection with the rotor windings and configured to obtain sensor data relating to the field current applied to the rotor windings, and an optical data connection configured to transmit field current data, said field current data being based on the obtained sensor data. The first aspect of the disclosure may seek to improve efficiency and torque accuracy, which further affects the drivability of an associated vehicle. A technical benefit may include accurate control of the torque by direct measure of the field current in the rotor.

Optionally in some examples, including in at least one preferred example, the sensor comprises a current sensor and/or a temperature sensor. A technical benefit may include utilizing efficient and robust sensor devices, providing reliable parameter data.

Optionally in some examples, including in at least one preferred example, the electrically excited synchronous machine further comprises a stationary body and a rotating body, wherein the optical data connection is provided between the rotating body and the stationary body. A technical benefit may include removing the need for fixed connections for data transfer between non-stationary components.

Optionally in some examples, including in at least one preferred example, the optical data connection comprises an optical transmitter and an optical receiver. A technical benefit may include a simple and robust data connection.

Optionally in some examples, including in at least one preferred example, the optical transmitter is arranged at the rotating body and wherein the optical receiver is arranged at the stationary body. A technical benefit may include simple yet robust mounting of the optical data connection.

Optionally in some examples, including in at least one preferred example, the optical transmitter is arranged on an axial end of the rotating body. A technical benefit may include a less complex data transfer, requiring a very short axial length of the data connection.

Optionally in some examples, including in at least one preferred example, the optical transmitter is centrally arranged on a rotating shaft of the rotor. A technical benefit may include rotational symmetry of the optical transmitter, keeping the circumferential position of the optical transmitted constant during rotation of the rotating shaft of the rotor.

Optionally in some examples, including in at least one preferred example, the optical transmitter is arranged concentrically, and radially displaced from the center, on a rotating shaft of the rotor. A technical benefit may include more space for mounting the optical transmitter, as the outer circumference of the rotating shaft can be used for the optical transmitter.

Optionally in some examples, including in at least one preferred example, the optical receiver is configured to convert a received optical signal to an analogue signal or to a digital signal. A technical benefit may include robust and reliable data transfer.

Optionally in some examples, including in at least one preferred example, the electrically excited synchronous machine further comprises a voltage pulse width modulator configured to receive a control signal for the stationary primary winding and used to control the field currents of the rotor windings. A technical benefit may include a simple and robust way to control the operation of the electrically excited synchronous machine.

Optionally in some examples, including in at least one preferred example, the electrically excited synchronous machine further comprises an inverter configured to provide the control signal to the voltage pulse width modulator and configured to supply phase currents to the stator windings. A technical benefit may include reliable, robust, and accurate control of the electrically excited synchronous machine.

Optionally in some examples, including in at least one preferred example, the inverter is further configured to determine the control signal based on the field current data. A technical benefit may include reducing the complexity of the inverter, by reducing the number of components and the required design work.

Optionally in some examples, including in at least one preferred example, the sensor comprises a current sensor and/or a temperature sensor, wherein the electrically excited synchronous machine further comprises: a stationary body and a rotating body, wherein the optical data connection is provided between the rotating body and the stationary body, wherein the optical data connection comprises an optical transmitter and an optical receiver, wherein the optical transmitter is arranged at the rotating body and wherein the optical receiver is arranged at the stationary body, wherein the optical transmitter is arranged on an axial end of the rotating body, wherein the optical transmitter is centrally arranged on a rotating shaft of the rotor, wherein the optical receiver is configured to convert a received optical signal to an analogue signal or to a digital signal, wherein the electrically excited synchronous machine further comprises: a voltage pulse width modulator configured to receive a control signal for the stationary primary winding and used to control the field currents of the rotor windings, an inverter configured to provide the control signal to the voltage pulse width modulator and configured to supply phase currents to the stator windings, wherein the inverter is further configured to determine the control signal based on the field current data, and to apply closed-loop control of the control signal. A technical benefit may include improved control accuracy and robustness.

According to a second aspect of the disclosure, a vehicle is provided. The vehicle comprises the electrically excited synchronous machine of the first aspect. The second aspect of the disclosure may seek to improve efficiency and torque accuracy, which further affects the drivability of an associated vehicle. A technical benefit may include accurate control of the torque by direct measure of the field current in the rotor.

According to a third aspect of the disclosure, a method for controlling an electrically excited synchronous machine is provided. The method comprises: supplying phase currents to a stator; providing a field current to rotor windings; obtaining sensor data relating to the field current supplied to the rotor windings, and optically transmitting field current data being based on the obtained sensor data. The third aspect of the disclosure may seek to improve efficiency and torque accuracy, which further affects the drivability of an associated vehicle. A technical benefit may include accurate control of the torque by direct measure of the field current in the rotor.

Optionally in some examples, including in at least one preferred example, optically transmitting field current data is performed by transmitting field current data from an optical transmitter to an optical receiver. A technical benefit may include providing for a simple and robust data connection.

Optionally in some examples, the method further comprises converting a received optical signal to an analogue signal or to a digital signal. A technical benefit may include robust and reliable data transfer.

Optionally in some examples, the method further comprises providing a control signal for a stationary primary winding of a transformer, said control signal being used to excite a secondary winding of the transformer and to generate the field currents for the rotor windings. A technical benefit may include a simple and robust way to control the operation of the electrically excited synchronous machine.

Optionally in some examples, the method further comprises determining the control signal based on the optically transmitted field current data. A technical benefit may include efficient control based on measured operational parameters.

Optionally in some examples, the method further comprises applying closed-loop control of the control signal. A technical benefit may include A technical benefit may include improved control accuracy and robustness.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary side view of a vehicle according to an example.
**FIG. 2** is an exemplary diagram of an electrical machine system according to an example.
**FIG. 3A** is a schematic cross-sectional view of an electrically excited synchronous machine according to an example.
**FIG. 3B** is a schematic cross-sectional view of an electrically excited synchronous machine according to another example.
**FIG. 4** is an exemplary diagram of an electrically excited synchronous machine according to an example.
**FIG. 5** is a schematic cross-sectional view of an electrically excited synchronous machine, according to an example.
**FIG. 6** is a schematic flow chart of a method for controlling an electrically excited synchronous machine according to an example.

### DETAILED DESCRIPTION

The detailed description set forth below provides information and examples of the disclosed technology with sufficient detail to enable those skilled in the art to practice the disclosure.

With this in mind, this disclosure relates to an electrically excited synchronous machines and specifically to a hardware configuration that allows for a simple, robust, and reliable communication of data from the rotating parts of the electrically excited synchronous machine. A general idea of the disclosure is to determine data that relates to the field current applied to the rotor windings, and to implement an optical data connection for communicating the determined data from the rotating parts of the electrically excited synchronous machine.

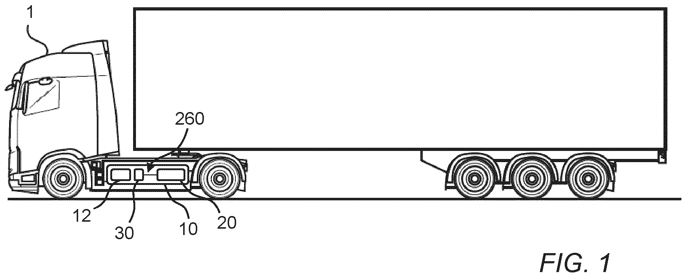

In **FIG. 1** a vehicle **1** is schematically shown. The vehicle **1** may be of any possible type, such as a truck with a trailer as in the shown example. The vehicle **1** may be an electric vehicle, or a hybrid vehicle. The vehicle **1** comprises at least one electrical machine system **10** being powered by an energy storage system **12,** such as one or more rechargeable batteries. The electrical machine system **10** comprises at least one electrically excited synchronous machine **20** and preferably at least one associated inverter **30.** The inverter **30** is typically connected to the electrically excited synchronous machine **20** by providing phase currents to the electrically excited synchronous machine **20.** As will be described further in the following section, the at least one electrical machine system **10** comprises an optical data connection **260** that is configured to transmit data relating to field currents applied to a rotor of the at least one electrically excited synchronous machine **20.**

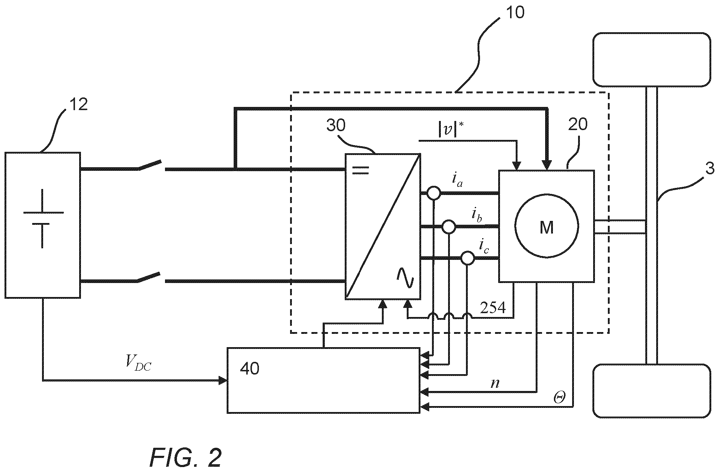

An example of an electrical machine system **10** is shown in **FIG. 2****.** The electrical machine system **10** comprises an electrically excited synchronous machine **20** and an inverter **30.** The electrically excited synchronous machine **20** may for example be mechanically connected to a drive axle **3** of the vehicle **1** in order to provide propulsion force to the vehicle **1.**

A machine controller **40** is provided and connected to the electrically excited synchronous machine **20** and to the inverter **30,** as well as to an associated battery **12.** The machine controller **40** is typically configured to perform field-oriented control of the electrically excited synchronous machine **20.** For this, the electrically excited synchronous machine **20** supplies the machine controller **40** with operational parameters, such as the machine speed n and the angular position *Θ*. Based on these parameters, as well as the DC voltage *V_{DC}* provided by the battery **12,** the machine controller **40** generates and supplies control signals to the inverter **30** that typically results in a set of phase currents *iₐ, i_{b}, i_{c}* delivered to the electrically excited synchronous machine **20.** As shown in **FIG. 2****,** a control signal | v |* is provided to the electrically excited synchronous machine **20.** The control signal |*v*|* may be provided from the inverter **30,** from the machine controller **40,** or from any other dedicated component (not shown) of the electrical machine system **10.** The control signal |*v*|* is used to control rotor field currents of the electrically excited synchronous machine **20,** as will be further described in the following.

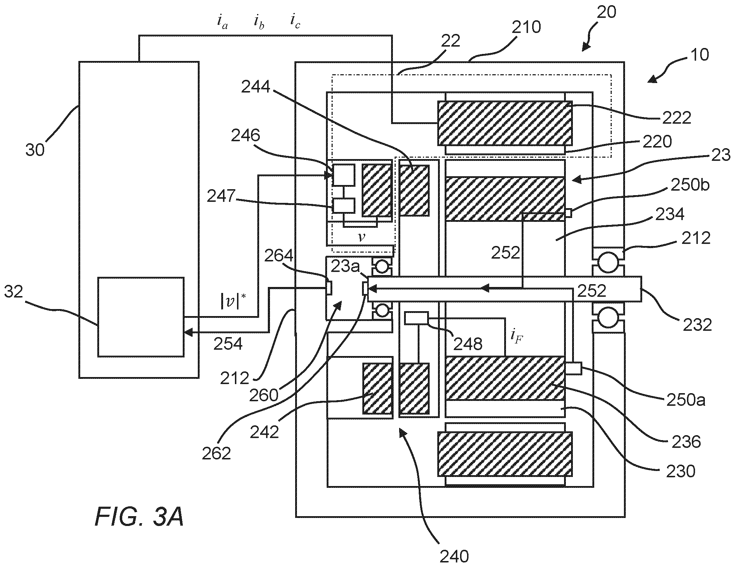

A schematic view of an electrical machine system **10** is shown in **FIG. 3A****,** representing an example where the inverter **30** is configured to provide the control signal |*v*|* for producing the desired rotor field currents.

The electrical machine system **10** comprises an electrically excited synchronous machine **20** and an inverter **30. The** electrically excited synchronous machine **20** comprises a machine housing **210,** a stator **220,** and a rotor **230.** The stator **220** and the rotor **230** are arranged inside the machine housing **210.**

The stator **220** is fixedly arranged radially outside the rotor **230,** and the stator **220** comprises a plurality of phase windings **222.** The stator **220** has an axial length that allows the stator **220,** including the phase windings **222,** to fit inside the machine housing **210.**

The rotor **230** is consequently arranged radially inside the stator **220.** The rotor **230** comprises a rotor shaft **232** and a rotor core **234.** The rotor shaft **232** is rotationally journalled in the machine housing **210** for example using one or more bearings **212.** The rotor core **234** is rotationally secured to the rotor shaft **232;** when the rotor core **234** is spinning, the rotor shaft **232** rotates as well by the same speed.

The axial length of the rotor core **234** is preferably corresponding to the axial length of the stator **220,** although the rotor core **234** may have any suitable axial length. The rotor core **234** comprises a plurality of rotor windings **236.** The rotor windings **236** will, when they are powered, provide a magnetic field that interacts with the magnetic field generator by the stator **220.**

The electrically excited synchronous machine **20** further comprises a transformer **240.** The transformer **240** comprises a primary winding **242** and a secondary winding **244.** The primary winding **242** is part of the machine housing **210,** i.e. the primary winding **242** is stationary during operation of the electrically excited synchronous machine **20.** The secondary winding **244** is part of the rotor **230,** and is preferably arranged at one axial end of the rotor core **234.** Optionally, the secondary winding **244** of the transformer **240** may be integrated with the rotor core **234.**

In another example, both the primary and the secondary windings **242, 244** of the transformer are forming part of the rotor **230,** such that both windings **242, 244** will rotate with the electrically excited synchronous machine **20.** Alternatively, both the primary and the secondary windings **242, 244** of the transformer **240** are arranged stationary in the machine housing **210.**

The inverter **30** is configured to supply the stator windings **222** with phase currents *iₐ, i_{b}, i_{c}.* In addition, the inverter **30** comprises a main controller **32** configured to determine a control signal |*v*|* for controlling the transformer **240,** and consequently the excitation of the rotor windings **236.**

The transformer **240** comprises a voltage pulse width modulator **246** which is configured to receive the control signal |*v*|* from the main controller **32** of the inverter **30.** The control signal |*v*|* is preferably carrying data representing a voltage reference, which is used as input to the voltage pulse width modulator **246** of the transformer **240** to determine the amplitude of a modulated voltage that excites the primary winding **242** of the transformer **240.** The voltage amplitude decides the current in the primary winding **242,** which generates a current in the rotating secondary winding **244** of the transformer **240.** The secondary winding **244** is connected to rectifier bridges **248** which are connected to the field windings **236** of the rotor **230.**

The voltage pulse width modulator **246** is preferably configured to generate a modulated signal which is received by an H-bridge **247** which in turn provides the primary winding **242** of the transformer **240** with the desired voltage v.

Consequently, it is possible to control the field current with the voltage reference |*v*|* that is sent out from the inverter **30** that is used to also control the phase voltages of the stator **220.**

The communication between the main controller **32** of the inverter **30** and the voltage pulse width modulator **246** of the transformer **240** can be an analogue or digital signal |*v*|* depending on what is suitable for the application. Further, the voltage pulse width modulator **246** may be configured to send out monitoring signals to the main controller **32.** This can enable additional safety functionality, and additional feedback signals can allow a closed-loop control if currents in the primary winding **242** and/or the secondary winding **244** of the transformer **240** are measured.

As indicated in **FIG. 3A****,** the electrically excited synchronous machine **20** comprises a stationary body **22** and a rotating body **23.** Typically, the stationary body **22** comprises the housing **210** and the stator **220,** while the rotating body **23** comprises the rotor **230.**

The electrically excited synchronous machine **20** further comprises a sensor **250** in connection with the rotor windings **236.** The sensor **250,** which e.g. may be a current sensor **250a** and/or a temperature sensor **250b,** is configured to obtain sensor data **252** relating to the field current ***i_{F}*** applied to the rotor windings **236.** The sensor(s) **250a-b** may be arranged in physical contact with the rotor windings **236** at any suitable location. For accurate control of the electrically excited synchronous machine **20,** this sensor data **252** needs to be communicated to any control unit, such as the inverter **30,** responsible for providing the control signal |*v*|*.

For this purpose, the electrically excited synchronous machine **20** comprises an optical data connection **260** configured to transmit field current data **254.** The field current data **254** is based on the obtained sensor data **252,** such that real time feedback of the field currents ***i_{F}*** can be provided. Preferably the optical data connection **260** comprises an optical transmitter **262** being arranged at the rotating body **23,** and an optical receiver **264** being arranged at the stationary body **22.**

As shown in **FIG. 3A****,** the optical transmitter **262** is arranged on an axial end **23a** of the rotating body **23,** such as centrally on the rotating shaft **232** of the rotor **230.** The optical transmitter **262** is connected to the one or more sensors **250a-b** such that measured data can be effectively transmitted to the optical transmitter **262** and optically transmitted to the optical received **264.** From the optical receiver **264,** the received field current data **254** can be further communicated to the associated control unit **32.**

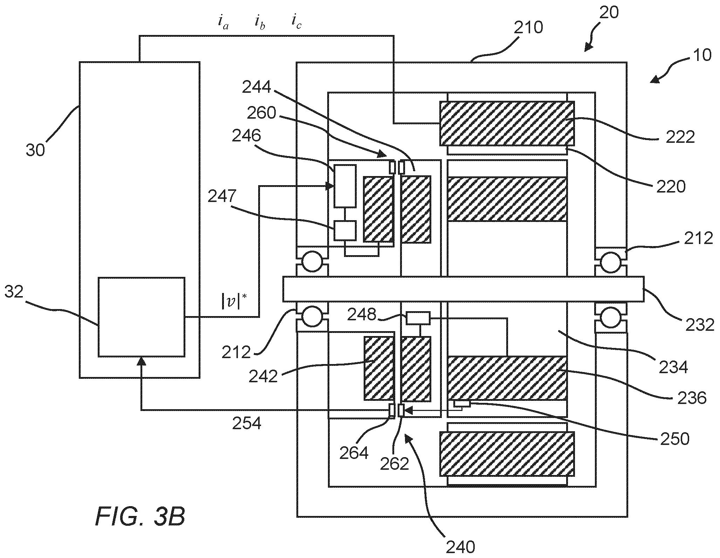

Another example of an electrically excited synchronous machine **20** is shown in **FIG. 3B****.** This example shares many components with the previous example, although the optical data connection **260** is different. Further, in **FIG. 3B** some components have been omitted (such as the sensors **250a-b),** however these are, as is well understood, also forming part of the electrically excited synchronous machine **20.**

The optical transmitter **262** is no longer arranged centrally on the axial end of the rotating shaft **232** but radially outwards. In the shown example, the optical transmitter **262** is arranged concentrically, and radially displaced from the center on the rotating shaft **232** of the rotor **230.** Here, the secondary side of the transformer **240** projects radially out from the rotating shaft **232.** The optical transmitter **262** is arranged at the outer radius of the secondary side of the transformer **244,** and the optical receiver **264** is radially aligned with the optical transmitter **262.** For this purpose, the optical receiver **264** is arranged at the outer radius of the primary side of the transformer **240.** It should be understood that the optical transmitter **262** and/or the optical receiver **264** may be single components arranged at a specific circumferential position, or they may be multiple components spaced apart along the circumference. In another example, the optical transmitter **262** and/or the optical receiver **264** are continuous ring-shaped components arranged around the entire circumference of the transformer sides.

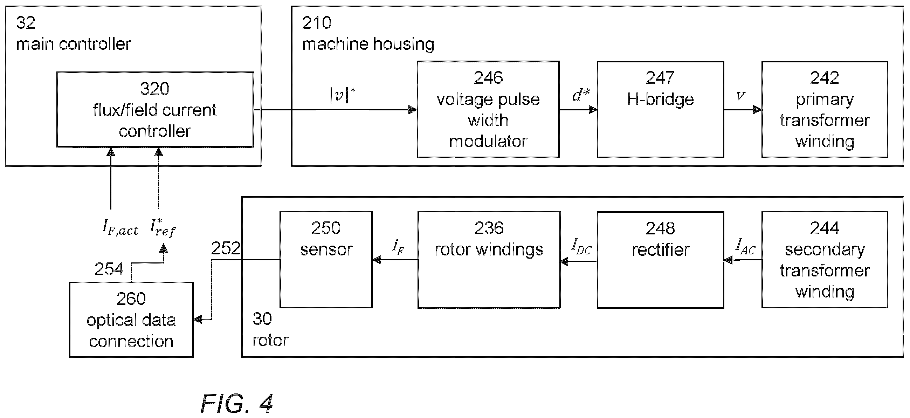

**FIG. 4** is an exemplary diagram of an electrical machine system **10** according to an example, and more specifically of an electrically excited synchronous machine **20** according to an example. A main controller **32** is integrated in an inverter **30** and comprises a flux/field current controller **320** configured to generate a control signal |*v*|* representing a reference voltage. The reference voltage |*v*|* is generated based on a requested field current ${I}_{ref}^{∗}$ and an actual field current *I_{F,act}* in the rotor windings **236.** From reference voltage |*v*|*, the voltage pulse width modulator **246** of the transformer **240** is configured to generate a modulated signal *d** that is send to an H-bridge **247,** which voltage output *v* is applied to the primary winding **242** of the transformer **240.** As a result, an AC current *I_{AC}* will flow through the secondary winding **244** of the transformer **240,** which current *I_{AC}* will be rectified by one or more rectifiers **248.** The resulting DC current *I_{DC}* is then used to excite the rotor windings **236.** One or more sensors **250** are configured to obtain sensor data **252** corresponding to the field currents *i_{F}* of the rotor windings **236,** and the optical data connection **260** is configured to optically transmit the field current data **254** obtained by the sensor **250** to the flux/field current controller **320.**

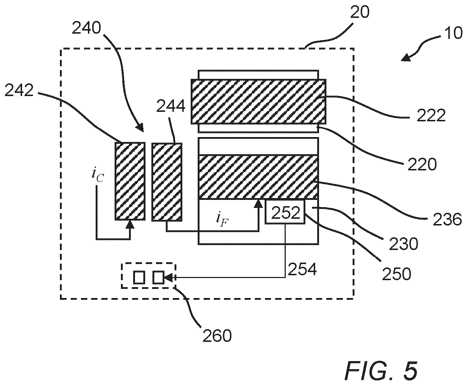

In **FIG. 5** another example of an electrically excited synchronous machine **20** is shown. The electrically excited synchronous machine **20** comprises a stator **220** having a plurality of stator windings **222,** a rotor **230** having a plurality of rotor windings **236,** and a transformer **240** comprising a stationary primary winding **242** and a secondary winding **244** arranged on the rotor **230.** The secondary winding **244** is configured to generate a field current ***i_{F}*** when excited by a control current ***i_{c}*** in the stationary primary winding **242.** The electrically excited synchronous machine **20** further comprises a sensor **250** in connection with the rotor windings **236** and configured to obtain sensor data **252** relating to the field current ***i_{F}*** applied to the rotor windings **236,** and an optical data connection **260** configured to transmit field current data **254,** said field **254** current data **254** being based on the obtained sensor data **252.**

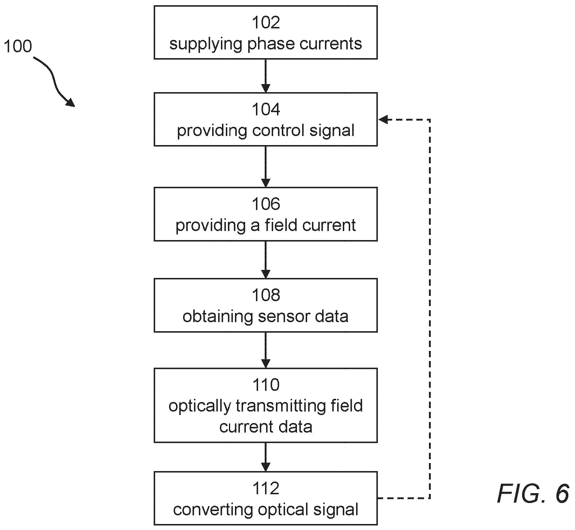

In **FIG. 6** a method **100** for controlling an electrically excited synchronous machine **20** is schematically shown. The method **100** comprises supplying **102** phase currents ***iₐ, i_{b}, i_{c}*** to a stator **220,** and providing **104** a control signal |*v*|* for a stationary primary winding **242** of a transformer **240,** wherein the control signal |*v*|* being used to excite a secondary winding **244** of the transformer **240** and to generate the field currents ***i_{F}*** for the rotor windings **236.** The method **100** also comprises providing **106** a field current ***i_{F}*** to rotor windings **236,** and obtaining **108** sensor data **252** relating to the field current ***i_{F}*** supplied to the rotor windings **222.** The method **100** also comprises optically transmitting **110** field current data **254** being based on the obtained sensor data **252,** preferably by transmitting field current data **254** from an optical transmitter **262** to an optical receiver **264.**

The method **100** may further comprise converting **112** a received optical signal to an analogue signal or to a digital signal.

Preferably, providing **104** the control signal |*v*|* is performed by determining the control signal |*v*|* based on the optically transmitted field current data **254.** The method **100** may further be performed by applying closed-loop control of the control signal |*v*|**.*

**Example 1:** An electrically excited synchronous machine (20), comprising: a stator (220) having a plurality of stator windings (222), a rotor (230) having a plurality of rotor windings (236), and a transformer (240) comprising a stationary primary winding (242) and a secondary winding (244) arranged on the rotor (230), said secondary winding (244) being configured to generate a field current (*i_{F}*) when excited by a control current (ic) in the stationary primary winding (242); wherein the electrically excited synchronous machine (20) further comprises: a sensor (250) in connection with the rotor windings (236) and configured to obtain sensor data (252) relating to the field current (*i_{F}*) applied to the rotor windings (236), and an optical data connection (260) configured to transmit field current data (254), said field current data (254) being based on the obtained sensor data (252).

**Example 2:** The electrically excited synchronous machine (20) of Example 1, wherein the sensor (250) comprises a current sensor (250a) and/or a temperature sensor (250b).

**Example 3:** The electrically excited synchronous machine (20) of Example 1 or 2, further comprising: a stationary body (22) and a rotating body (23), wherein the optical data connection (260) is provided between the rotating body (23) and the stationary body (22).

**Example 4:** The electrically excited synchronous machine (20) of any of Examples 1-3, wherein the optical data connection (260) comprises an optical transmitter (262) and an optical receiver (264).

**Example 5:** The electrically excited synchronous machine (20) according to Example 3 and 4, wherein the optical transmitter (262) is arranged at the rotating body (23) and wherein the optical receiver (264) is arranged at the stationary body (22).

**Example 6:** The electrically excited synchronous machine (20) according to Example 4 or 5, wherein the optical transmitter (262) is arranged on an axial end (23a) of the rotating body (23).

**Example 7:** The electrically excited synchronous machine (20) according to any of Examples 4-6, wherein the optical transmitter (262) is centrally arranged on a rotating shaft (232) of the rotor (230).

**Example 8:** The electrically excited synchronous machine (20) according to any of Examples 4-6, wherein the optical transmitter (262) is arranged concentrically, and radially displaced from the center, on a rotating shaft (232) of the rotor (230).

**Example 9:** The electrically excited synchronous machine (20) according to any of Examples 4-8, wherein the optical receiver (264) is configured to convert a received optical signal to an analogue signal or to a digital signal.

**Example 10:** The electrically excited synchronous machine (20) according to any of Examples 1-9, further comprising: a voltage pulse width modulator (246) configured to receive a control signal (|*v*|*) for the stationary primary winding (242) and used to control the field currents (*i_{F}*) of the rotor windings (236).

**Example 11:** The electrically excited synchronous machine (20) according to Examples 10, further comprising: an inverter (30) configured to provide the control signal (|*v*|*) to the voltage pulse width modulator (246) and configured to supply phase currents (*iₐ, i_{b}, i_{c}*) to the stator windings (222).

**Example 12:** The electrically excited synchronous machine (20) according to Examples 11, wherein the inverter (30) is further configured to determine the control signal (|*v*|*) based on the field current data (254).

**Example 13:** The electrically excited synchronous machine (20) according to Example 1, wherein the sensor (250) comprises a current sensor (250a) and/or a temperature sensor (250b), wherein the electrically excited synchronous machine (20) further comprises: a stationary body (22) and a rotating body (23), wherein the optical data connection (260) is provided between the rotating body (23) and the stationary body (22), wherein the optical data connection (260) comprises an optical transmitter (262) and an optical receiver (264), wherein the optical transmitter (262) is arranged at the rotating body (23) and wherein the optical receiver (264) is arranged at the stationary body (22), wherein the optical transmitter (262) is arranged on an axial end (23a) of the rotating body (23), wherein the optical transmitter (262) is centrally arranged on a rotating shaft (232) of the rotor (230), wherein the optical receiver (264) is configured to convert a received optical signal to an analogue signal or to a digital signal, wherein the electrically excited synchronous machine (20) further comprises: a voltage pulse width modulator (246) configured to receive a control signal (|*v*|*) for the stationary primary winding (242) and used to control the field currents (*i_{F}*) of the rotor windings (236), an inverter (30) configured to provide the control signal (|*v*|*) to the voltage pulse width modulator (246) and configured to supply phase currents (*iₐ, i_{b}, i_{c}*) to the stator windings (222), wherein the inverter (30) is further configured to determine the control signal (|*v*|*) based on the field current data (254), and to apply closed-loop control of the control signal (|*v*|*).

**Example 14:** A vehicle comprising the electrically excited synchronous machine (20) according to any of Examples 1-13.

**Example 15:** A method for controlling an electrically excited synchronous machine, comprising: supplying phase currents (*iₐ, i_{b}, i_{c}*) to a stator (220); providing a field current (*i_{F}*) to rotor windings (236); obtaining sensor data (252) relating to the field current (*i_{F}*) supplied to the rotor windings (222), and optically transmitting field current data (254) being based on the obtained sensor data (252).

**Example 16:** The method of Example 15, wherein optically transmitting field current data (254) is performed by transmitting field current data (254) from an optical transmitter (262) to an optical receiver (264).

**Example 17:** The method of Example 15 or 16, further comprising: converting a received optical signal to an analogue signal or to a digital signal.

**Example 18:** The method of any of Examples 15-17, further comprising: providing a control signal (|*v*|*) for a stationary primary winding (242) of a transformer (240), said control signal (|*v*|*) being used to excite a secondary winding (244) of the transformer (240) and to generate the field currents (*i_{F}*) for the rotor windings (236).

**Example 19:** The method of Example 18, further comprising: determining the control signal (|*v*|*) based on the optically transmitted field current data (254).

**Example 20:** The method of Example 19, further comprising: applying closed-loop control of the control signal (|*v*|*).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electrically excited synchronous machine (20), comprising:
a stator (220) having a plurality of stator windings (222),
a rotor (230) having a plurality of rotor windings (236), and
a transformer (240) comprising a stationary primary winding (242) and a secondary winding (244) arranged on the rotor (230), said secondary winding (244) being configured to generate a field current (*i_{F}*) when excited by a control current (ic) in the stationary primary winding (242);
wherein the electrically excited synchronous machine (20) further comprises:
a sensor (250) in connection with the rotor windings (236) and configured to obtain sensor data (252) relating to the field current (*i_{F}*) applied to the rotor windings (236), and
an optical data connection (260) configured to transmit field current data (254), said field current data (254) being based on the obtained sensor data (252).

2. The electrically excited synchronous machine (20) of claim 1, wherein the sensor (250) comprises a current sensor (250a) and/or a temperature sensor (250b).

3. The electrically excited synchronous machine (20) of claim 1 or 2, further comprising:
a stationary body (22) and a rotating body (23), wherein the optical data connection (260) is provided between the rotating body (23) and the stationary body (22).

4. The electrically excited synchronous machine (20) of any of claims 1-3, wherein the optical data connection (260) comprises an optical transmitter (262) and an optical receiver (264).

5. The electrically excited synchronous machine (20) according to claim 3 and 4, wherein the optical transmitter (262) is arranged at the rotating body (23) and wherein the optical receiver (264) is arranged at the stationary body (22).

6. The electrically excited synchronous machine (20) according to claim 4 or 5, wherein the optical transmitter (262) is arranged on an axial end (23a) of the rotating body (23).

7. The electrically excited synchronous machine (20) according to any of claims 4-6, wherein the optical transmitter (262) is centrally arranged on a rotating shaft (232) of the rotor (230).

8. The electrically excited synchronous machine (20) according to any of claims 4-6, wherein the optical transmitter (262) is arranged concentrically, and radially displaced from the center, on a rotating shaft (232) of the rotor (230).

9. The electrically excited synchronous machine (20) according to any of claims 4-8, wherein the optical receiver (264) is configured to convert a received optical signal to an analogue signal or to a digital signal.

10. The electrically excited synchronous machine (20) according to any of claims 1-9, further comprising:
a voltage pulse width modulator (246) configured to receive a control signal (|*v*|*) for the stationary primary winding (242) and used to control the field currents (*i_{F}*) of the rotor windings (236).

11. The electrically excited synchronous machine (20) according to claims 10, further comprising:
an inverter (30) configured to provide the control signal (|*v*|*) to the voltage pulse width modulator (246) and configured to supply phase currents (*iₐ, i_{b}, i_{c}*) to the stator windings (222).

12. The electrically excited synchronous machine (20) according to claims 11, wherein the inverter (30) is further configured to determine the control signal (|*v*|*) based on the field current data (254).

13. The electrically excited synchronous machine (20) according to claim 1,
wherein the sensor (250) comprises a current sensor (250a) and/or a temperature sensor (250b),
wherein the electrically excited synchronous machine (20) further comprises:
a stationary body (22) and a rotating body (23), wherein the optical data connection (260) is provided between the rotating body (23) and the stationary body (22),
wherein the optical data connection (260) comprises an optical transmitter (262) and an optical receiver (264),
wherein the optical transmitter (262) is arranged at the rotating body (23) and wherein the optical receiver (264) is arranged at the stationary body (22),
wherein the optical transmitter (262) is arranged on an axial end (23a) of the rotating body (23),
wherein the optical transmitter (262) is centrally arranged on a rotating shaft (232) of the rotor (230),
wherein the optical receiver (264) is configured to convert a received optical signal to an analogue signal or to a digital signal,
wherein the electrically excited synchronous machine (20) further comprises:
a voltage pulse width modulator (246) configured to receive a control signal (|*v*|*) for the stationary primary winding (242) and used to control the field currents (*i_{F}*) of the rotor windings (236),
an inverter (30) configured to provide the control signal (|*v*|*) to the voltage pulse width modulator (246) and configured to supply phase currents (*iₐ, i_{b}, i_{c}*) to the stator windings (222),
wherein the inverter (30) is further configured to determine the control signal (|*v*|*) based on the field current data (254), and to apply closed-loop control of the control signal (|*v*|*).

14. A vehicle comprising the electrically excited synchronous machine (20) according to any of claims 1-13.

15. A method for controlling an electrically excited synchronous machine, comprising:
supplying phase currents (*iₐ, i_{b}, i_{c}*) to a stator (220);
providing a field current (*i_{F}*) to rotor windings (236);
obtaining sensor data (252) relating to the field current (*i_{F}*) supplied to the rotor windings (222), and
optically transmitting field current data (254) being based on the obtained sensor data (252).
